# EUROPEAN PATENT SPECIFICATION

(11) **EP 3 771 116 B1**
(45) Date of publication and mention of the grant of the patent: **10.07.2024**
(21) Application number: 19305972.2
(22) Date of filing: 23.07.2019
(51) Int. Cl.: H04B 10/035, H04B 10/071, H04B 10/077

(54) **TECHNIQUE FOR MONITORING OPTICAL PATHS**
VERFAHREN ZUR ÜBERWACHUNG VON OPTISCHEN PFADEN
TECHNIQUE PERMETTANT DE SURVEILLER DES TRAJECTOIRES OPTIQUES

(43) Date of publication of application: 27.01.2021
(73) Proprietor: Alcatel Submarine Networks, 91620 Nozay (FR)
(72) Inventor: AIT SAB, Omar, 91290 ARPAJON (FR)
(74) Representative: Loyer & Abello

(56) References cited:
- JP-A- 2001 148 665
- US-A1- 2014 086 573
- US-B1- 6 708 004

## Description

### BACKGROUND

### Field

Various example embodiments relate to optical communication equipment and, more specifically but not exclusively, to methods and apparatus for transmitting optical signals using amplified long-haul optical links.

### Description of the Related Art

This section introduces aspects that may help facilitate a better understanding of the disclosure. Accordingly, the statements of this section are to be read in this light and are not to be understood as admissions about what is in the prior art or what is not in the prior art.

Subsea network operators are facing a fast growth in bandwidth demand, in part due to the development and deployment of cloud-based services. As a result, they need to optimize the capacity and performance of their fiber-optic cable plants to enable the corresponding networks to efficiently handle the increasing data flows. Due to this need, one of the requirements to telecom equipment manufacturers is to provide the network operator(s) with systems that can be used to operate the submerged plant elements in a manner that guarantees fast fault detection and mitigation, improved maintainability, good performance characteristics throughout the cable-plant's lifespan, upgradable capacity, and/or any other pertinent benchmarks. It is also desirable for the cable plant to be amenable to relatively low-cost implementation and/or maintenance. US 2014/086573 A1 discloses a submarine optical cable line with repeaters as well as means to monitor said repeaters using supervisory signals.

### SUMMARY OF SOME SPECIFIC EMBODIMENTS

Disclosed herein are various embodiments of a bidirectional optical repeater having two unidirectional optical amplifiers and a supervisory optical circuit connected to optically couple two optical paths through the repeater. The term "optical path" refers to the flow of optical signals from a transmitting node (e.g., a first landing station of a submarine communication network) to a receiving node (e.g., a second landing station), while the term "optical pathway" refers to the flow of optical signals from one optical path to the other within an optical repeater. In long-haul submarine and terrestrial optical communication networks, each optical path includes multi-wavelength optical fibers connected end-to-end by one or more optical repeaters that amplify the optical signals. In some embodiments, in addition to carrying communication signals, the optical paths can also carry monitoring signals such as supervisory signals in one of two designated supervisory wavelengths as well as optical time-domain reflectometer (OTDR) signals, which may have any suitable in-band or out-of-band wavelength.

In an example embodiment, the supervisory optical circuit enables both the input and the output of an optical amplifier to be characterized using a single supervisory wavelength, such that the first landing station can transmit a monitoring signal in one supervisory wavelength to characterize the input and output of one optical amplifier in each repeater in the optical communication network at the same time that the second landing station transmits a monitoring signal in the other supervisory wavelength to characterize the input and output of the other optical amplifier in each repeater.

According to an example embodiment, provided is an apparatus according to claim 1.

According to another example embodiment, provided is a method according to claim 11 for operating the above-referenced optical repeater.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 shows a block diagram of an optical communication system having a pair of unidirectional optical paths according to an embodiment;
FIG. 2 shows a block diagram of an optical repeater that can be used to implement each optical repeater of FIG. 1 according to an embodiment; and
FIG. 3 shows a block diagram of an optical repeater that can be used to implement each optical repeater of FIG. 1 according to another embodiment.

### DETAILED DESCRIPTION

Some embodiments may benefit from the use of features disclosed in European Patent Application Nos. EP17305569.0 and EP17305570.8, both filed on 17 May 2017, in European Patent Application No. EP 18306007.8, filed on 25 July 2018, in European Patent Application No. EP19305187.7, filed on 15 February 2019, and in European Patent Application No. EP19305867.4, filed on 27 June 2019.

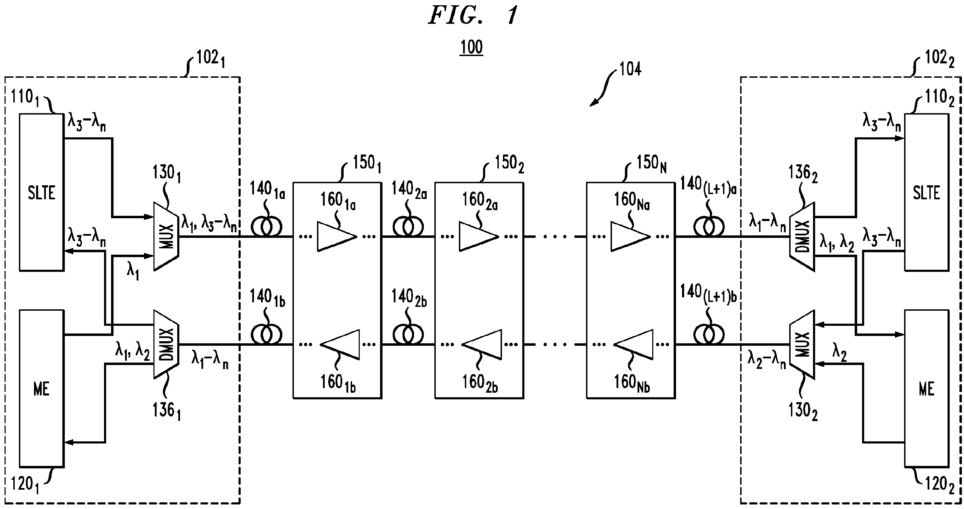

FIG. 1 shows a block diagram of an optical communication system **100** having a pair of unidirectional optical paths according to an embodiment. In the shown embodiment, system **100** comprises landing stations **102₁** and **102₂** connected by way of a wet plant **104.** Landing stations **102₁** and **102₂** are typically further connected to respective terrestrial networks (not shown in FIG. 1). In an alternative embodiment, system **100** may have additional landing stations connected to wet plant **104,** as known in the pertinent art, e.g., using one or more branching units (not shown in FIG. 1).

In an example embodiment, wet plant **104** comprises an undersea cable system that includes, *inter alia,* submersible optical repeaters **150₁-150_{L}** serially connected by spans **140** of optical fiber, e.g., as indicated in FIG. 1, where L is a positive integer. In the shown embodiment, each span **140ᵢ** includes two optical fibers, which are labeled **140ᵢₐ** and **140_{ib}**, respectively, where i=1, 2, ..., L+1. The number L of optical repeaters **150** used in wet plant **104** depends on the particular embodiment and may be in the range, e.g., from 1 to ~200. A typical length of a fiber span **140ᵢ** may range from ~50 km to ~100 km, depending on the distance between landing stations **102₁** and **102₂**.

In the shown embodiment, an optical repeater **150ⱼ** comprises two optical amplifiers (OAs) **160ⱼₐ** and **160_{jb}**, where j=1, 2, ..., L. Optical amplifier **160ⱼₐ** is configured to amplify optical signals traveling towards landing station **102₂**. Optical amplifier **160_{jb}** is similarly configured to amplify optical signals traveling towards landing station **102₁**. In an example embodiment, an optical amplifier **160ⱼ** can be implemented as known in the pertinent art, e.g., using an erbium-doped fiber, a gain-flattening filter, and one or more laser-diode pumps. The laser diodes can be powered by a DC current from the corresponding shore-based power-feeding equipment (not shown in FIG. 1), fed through the electrical conductor(s) of the corresponding submarine cable, which also typically contains optical fibers **140ᵢₐ** and **140_{ib}**. In some embodiments, the electrical conductors (e.g., wires) may be located near the center of the submarine cable. In some other embodiments, the electrical conductors may have a generally tubular shape, e.g., with a ring-like cross-section in a plane orthogonal to the longitudinal axis of the submarine cable.

In an alternative embodiment, optical repeaters **150** can be designed for two, three, four, or more pairs of optical fibers **140ᵢ** connected thereto at each side thereof. For example, an optical repeater **150** designed to be compatible with a four-fiber-pair submarine cable typically includes eight optical amplifiers **160** arranged in four amplifier pairs, each pair being similar to optical amplifiers **160ⱼₐ** and **160_{jb}**.

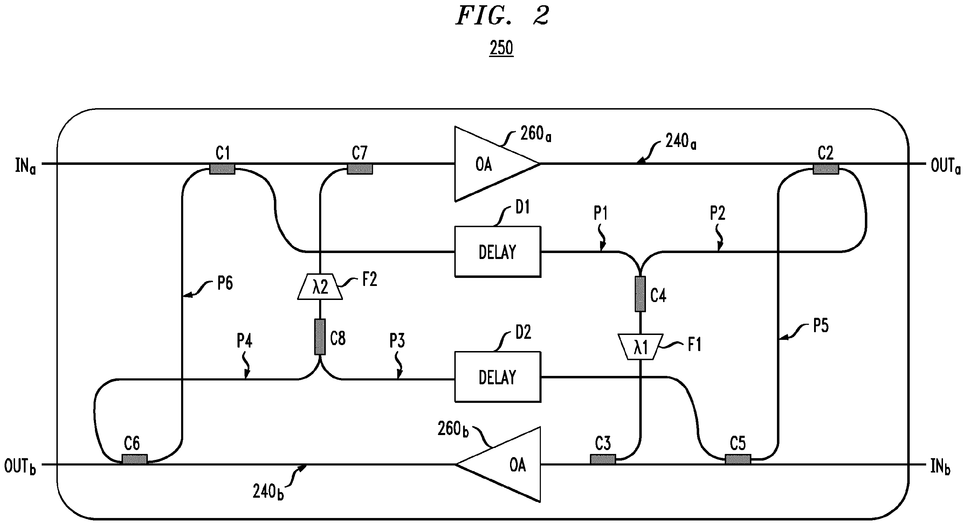

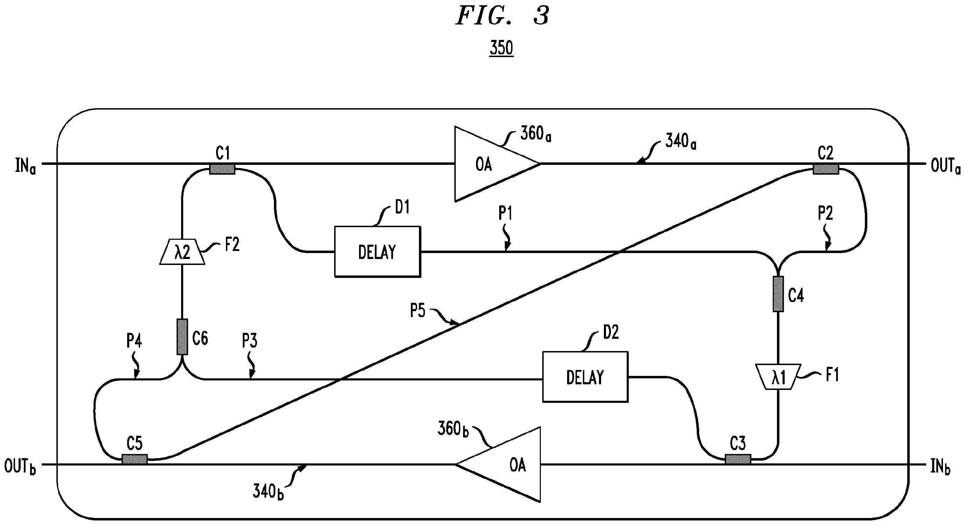

Optical repeater **150ⱼ** may also comprise a supervisory optical circuit (not shown in FIG. 1) that enables monitoring equipment (ME) units **120₁** and **120₂** located at landing stations **102₁** and **102₂**, respectively, to monitor the operating status of the optical repeaters. Example embodiments of the supervisory optical circuit that can be used in optical repeater **150ⱼ** are described, e.g., in reference to FIGs. 2 and 3. Some embodiments of the supervisory optical circuit may benefit from the use of at least some features disclosed in the above-cited European Patent Application Nos. EP17305569.0, EP17305570.8, EP18306007.8, EP19305187.7, and EP19305867.4.

In an example embodiment, ME unit **120₁** in the first landing station **102₁** is configured to use a dedicated supervisory wavelength (labeled λ₁) to generate supervisory signals (also known as monitoring signals) that can be sent through the fibers **140ᵢₐ** towards the second landing station **102₂**. Similarly, ME unit **120₂** in the second landing station **102₂** is configured to use a different, dedicated supervisory wavelength (labeled λ₂) to generate supervisory signals that can be sent through the fibers **140_{ib}** towards the first landing station **102₁**. The supervisory optical circuit of each optical repeater **150ⱼ** is configured to loop back, in the opposite direction, at least a portion of each supervisory signal. As a result, ME unit **120₁** can receive a looped-back supervisory signal comprising the portions of the original supervisory signal in the first supervisory wavelength λ₁ returned to that ME unit by the different supervisory optical circuits of the different optical repeaters **150₁-150_{N}**. Similarly, ME unit **120₂** can receive a looped-back supervisory signal comprising the portions of the corresponding supervisory signal in the second supervisory wavelength λ₂ returned to that ME unit by the different supervisory optical circuits of the different optical repeaters **150₁-150_{N}**. The looped-back supervisory signals received by ME units **120₁** and **120₂** can be processed and analyzed to determine the present operating status and/or certain operating characteristics of at least some or all of optical repeaters **150₁-150_{N}** in wet plant **104.** The determined parameters may include but are not limited to: (i) input and output signal levels and the gains of some or all individual optical amplifiers (OAs) **160ⱼₐ** and 1**60_{jb}**; (ii) non-catastrophic faults in individual optical fibers **140i,** such as any gradual loss increases therein; and (iii) catastrophic failures in individual optical repeaters **150ⱼ** and/or optical fibers **140ᵢₐ**

Landing station **102₁** comprises a submarine line terminal equipment (SLTE) unit **110₁** and ME unit **120₁** connected to wet plant **104** by way of a wavelength multiplexer (MUX) **130₁** and a wavelength de-multiplexer (DMUX) **136₁** as indicated in FIG. 1. The MUX/DMUX functions could also be implemented using couplers or WSS (Wavelength Selective Switches). In an example embodiment, SLTE unit **110₁** includes a wavelength-division-multiplexing (WDM) transceiver (not shown in FIG. 1) configured to transmit and receive payload-carrying optical signals using carrier wavelengths λ₃-λₙ, where n generally denotes the number of WDM channels in system 100. The number n can be in the range, e.g., between ~10 and ~150.

In an example embodiment, carrier wavelengths λ₁-λₙ can be selected in accordance with a frequency (wavelength) grid, such as a frequency grid that complies with the ITU-T G.694.1 Recommendation.

The frequency grid used in system **100** can be defined, e.g., in the frequency range from about 184 THz to about 201 THz, with a 100-, 50-, 25-, or 12.5-GHz spacing of the channels therein. While typically defined in frequency units, the parameters of the grid can equivalently be expressed in wavelength units. For example, in the wavelength range from about 1528 nm to about 1568 nm, the 100-GHz spacing between the centers of neighboring WDM channels is equivalent to approximately 0.8-nm spacing. In alternative embodiments, other fixed or flexible (flex) frequency grids can be used as well.

In operation, MUX **130₁** multiplexes the payload optical signals of carrier wavelengths λ₃-λₙ generated by SLTE unit **110₁** and the supervisory optical signals of carrier wavelength λ₁, and applies the resulting multiplexed optical signal to optical fiber **140₁ₐ**. DMUX **136₁** de-multiplexes a multiplexed optical signal received from optical fiber **140_{1b}** into two portions. The first portion has payload optical signals of carrier wavelengths λ₃-λₙ and is directed to SLTE unit **110₁**. The second portion has the looped-back supervisory optical signals of carrier wavelength λ₁ as well as the supervisory optical signals of carrier wavelength λ₂ generated by ME **120₂** in the second landing station **102₂** and is directed to ME unit **120₁**.

In an example embodiment, ME unit **120₁** comprises an Coherent Optical Time-Domain Reflectometer (COTDR, not shown in FIG. 1) configured to optically probe wet plant **104** using carrier wavelength λ₁. For example, ME unit **120₁** can be designed to perform OTDR measurements by detecting and processing the looped-back supervisory optical signals received from optical repeaters **150₁-150_{N}**. In general, ME unit **120₁** can be configured to use any suitable OTDR method. Some embodiments of ME unit **120₁** may benefit from the use of at least some OTDR features and/or techniques disclosed, e.g., in U.S. Patent Nos. 9,341,543, 9,310,274, 9,240,836, 9,170,173, 9,143,228, 9,042,721, 9,036,991, 9,008,503, 8,942,556, 8,837,938, 8,805,183, 8,502,964, and 8,280,253 and U.S. Patent Application Publication Nos. 2011/0216996, 2013/0216176, and 2014/0212130.

In some embodiments, landing station **102₁** can be designed and configured to perform OTDR measurements in a normal operating mode, e.g., by detecting and processing reflected and/or backscattered optical signals having carrier wavelengths λ₁-λₙ.

Alternatively or in addition, landing station **102₁** can be designed and configured to perform OTDR measurements in a special optical-link monitoring (OLM) operating mode, during which the corresponding transceiver generates and applies to wet plant **104** a modulated optical signal with a waveform that facilitates OTDR measurements, e.g., in terms of providing a higher signal-to-noise ratio (SNR) and/or a better spatial resolution for OTDR measurements than those technically achievable with payload-carrying optical signals. Transmission of payload data may be temporarily halted while landing station **102₁** is in the OLM operating mode and may be resumed when the corresponding transceiver is switched back to the normal operating mode. This particular type of OTDR measurements can generally be performed using any suitable wavelength, with the possible exception of the wavelengths λ₁ and λ₂. The used wavelength might or might not coincide with any of the wavelengths λ₃-λₙ.

In different embodiments, some OLM functions can be based on different types of OTDR measurements. For example, in one possible embodiment, landing station **102₁** can be designed and configured to perform OTDR measurements by detecting and processing the elastically reflected light and/or backscattered light produced due to Rayleigh scattering in wet plant **104.** In another possible embodiment, landing station **102₁** can be designed and configured to perform OTDR measurements by detecting and processing the backscattered light produced due to Brillouin scattering in wet plant **104.** In yet another possible embodiment, landing station **102₁** can be designed and configured to perform OTDR measurements by detecting and processing the backscattered light produced due to Raman scattering in wet plant **104.** In yet another possible embodiment, landing station **102₁** can be designed and configured to perform coherent OTDR (COTDR) measurements or correlation OTDR measurements.

Landing station **102₂** is generally analogous to landing station **102₁** and comprises an SLTE unit **110₂**, ME unit **120₂,** a MUX **130₂,** and a DMUX **136₂**. The analogous elements/components of the two landing stations are labeled in FIG. 1 using the same numerical labels, but with different respective subscripts. The descriptions of SLTE unit **110₁**, ME unit **120₁,** MUX **130₁,** and DMUX **136₁** of landing station **102₁** given above generally apply to SLTE unit **110₂**, ME unit **120₂,** MUX **130₂,** and DMUX **130₂,** respectively, of landing station **102₂**, except that the carrier wavelength λ₂ is used instead of the carrier wavelength λ₁, and are not repeated here.

In various embodiments, each of landing stations **102₁** and **102₂** may further include one or more of the following conventional elements/components: (i) power feeding equipment; (ii) system supervisory equipment; (iii) network management equipment; (iv) cable termination boxes; (v) network protection equipment; and (vi) various interface circuits.

In some other embodiments, more than two carrier wavelengths of the WDM set λ₁-λₙ can be allocated for supervisory functions. A person of ordinary skill in the art will understand, without undue experimentation, how to modify MUXes **130,** DMUXes **136,** and/or other pertinent system components to be compatible with such alternative WDM-channel allocations for supervisory functions.

In an example embodiment, a supervisory optical circuit of optical repeater **150ⱼ** is implemented using narrow band-pass optical filters (NBPOFs, not shown in FIG. 1, see FIGs. 2 and 3).

As used herein the term "narrow band-pass optical filter" refers to an optical device that passes optical frequencies (wavelengths) within a certain relatively narrow range and rejects (or strongly attenuates) optical frequencies outside that range. The bandwidth of the narrow band-pass optical filter is much smaller than any of the carrier frequencies that are being passed therethrough. For example, a center frequency of the pass band can be ~200 THz, whereas the bandwidth can be ~100 GHz or ~10 GHz, which is approximately three or four orders of magnitude smaller.

The planar-lightwave-circuit (PLC) technology enables telecom equipment manufacturers to produce narrow band-pass optical filters in large quantities and/or relatively inexpensively. There are many mature filter designs from which the manufacturer can choose for the intended application. In addition, a PLC-based narrow band-pass optical filter can be made tunable in a relatively straightforward manner, without an expensive and/or time-consuming redesign.

Various embodiments disclosed herein can beneficially leverage some of these and other technical features of narrow band-pass optical filters to provide a supervisory optical circuit for optical repeater **150ⱼ** that is capable of meeting and/or exceeding the operating requirements of network operator(s) and is amenable to low-cost implementation. In addition, at least some of the disclosed embodiments can beneficially provide significant flexibility in the manner in which supervisory optical circuits can be designed and/or operated.

FIG. 2 shows a block diagram of an optical repeater **250** that can be used for each optical repeater **150ⱼ** of FIG. 1 according to an embodiment. Optical repeater **250** has optical input ports **INₐ** and **IN_{b}** and optical output ports **OUTₐ** and **OUT_{b}** that can be used to connect the optical repeater **250** to optical fibers **140** of wet plant **104.** For example, if optical repeater **250** is deployed in system **100** (FIG. 1) as optical repeater **150ⱼ**, then the ports **INₐ**, **OUTₐ**, **IN_{b}**, and **OUT_{b}** can be connected to optical fibers **140ⱼₐ**, **140₍ⱼ₊₁₎ₐ**, **140_{(j+1)b}**, and **140_{jb}**, respectively.

In an example embodiment, optical repeater **250** can receive and emit optical signals on any of the ports **INₐ**, **IN_{b}**, **OUTₐ**, and **OUT_{b}**, with each of these ports being a bidirectional optical port. The designation of the ports in this specification and in the appended claims as "input ports" or "output ports" should not be construed as limiting these ports to unidirectional configurations and is used to facilitate better understanding of certain circuit functions. For example, the ports **INₐ** and **IN_{b}** do operate as optical input ports for payload signals. The ports **OUTₐ** and **OUT_{b}** similarly operate as optical output ports for the payload signals.

Optical amplifier (OA) **260ₐ** of optical repeater **250** is located in an optical path **240ₐ** that connects optical ports **INₐ** and **OUTₐ**. OA **260_{b}** is similarly located in an optical path **240_{b}** that connects optical ports **IN_{b}** and **OUT_{b}**. Optical repeater **250** also includes a supervisory optical circuit (SOC) that optically couples optical paths **240ₐ** and **240_{b}**. In particular, optical repeater **250** uses optical couplers **C1-C8,** delays **D1** and **D2,** filters **F1** and **F2,** and suitable interconnecting optical fibers or waveguides to form optical pathways **P1-P6** that couple optical paths **240ₐ** and **240_{b}**. As indicated in FIG. 2, filter **F1** is an NBPOF that passes optical signals of carrier wavelength λ₁ and blocks all other carrier wavelengths λ₂-λₙ, and filter **F2** is an NBPOF that passes optical signals of carrier wavelength λ₂ and blocks all other carrier wavelengths λ₁, λ₃-λₙ.

Optical pathway **P1** connects coupler **C1** to coupler **C3** via delay **D1**, coupler **C4,** and filter **F1**. Optical pathway **P2** connects coupler **C2** to coupler **C3** via coupler **C4** and filter **F1**. Thus, optical pathways **P1** and **P2** share coupler **C4** and filter **F1**. Similarly, optical pathway **P3** connects coupler **C5** to coupler **C7** via delay **D2,** coupler **C8,** and filter **F2,** while optical pathway **P4** connects coupler **C6** to coupler **C7** via coupler **C8** and filter **F2,** such that optical pathways **P3** and **P4** share coupler **C8** and filter **F2.** Since they contain discrete delay elements **D1** and **D2,** respectively, optical pathways **P1** and **P3** are referred to herein as delayed pathways, while optical pathways **P2** and **P4** are referred to herein as un-delayed pathways because they do not contain discrete delay elements.

In addition, optical repeater **250** has two OTDR optical pathways **P5** and **P6,** where OTDR optical pathway **P5** connects coupler **C2** to coupler **C5,** and OTDR optical pathway **P6** connects coupler **C6** to coupler **C1.**

In an example embodiment, the SOC of optical repeater **250** can be a planar lightwave circuit or a part of a planar lightwave circuit.

In operation, optical repeater **250** provides (i) two different loop-back paths for the supervisory optical signals of carrier wavelength λ₁ via optical pathways **P1** and **P2** and (ii) two different loop-back paths for the supervisory optical signals of carrier wavelength λ₂ via optical pathways **P3** and **P4.** Optical repeater **250** also provides (i) OTDR optical pathway **P5** for backscattered light to cross from optical path **240ₐ** to optical path **240_{b}** and (ii) OTDR optical pathway **P6** for backscattered light to cross from optical path **240_{b}** to optical path **240ₐ**, both of these OTDR optical pathways being configured to bypass the filters **F1** and **F2** (and the delays **D1** and **D2**). As such, the backscattered light directed through the OTDR optical pathways **P5** and **P6** can be of any suitable wavelength, e.g., have one of carrier wavelengths λ₃-λₙ or any out-of-band wavelength, such as a wavelength corresponding to a different telecom band than that of wavelengths λ₁-λₙ.

As known in the pertinent art, the backscattered light can be generated in wet plant **104** through a number of physical mechanisms, such as (i) a catastrophic defect in the optical fiber; (ii) a relatively large temperature gradient along the length of the optical fiber; (iii) a non-catastrophic defect that might be caused by sheering, stressing, shaking, and/or excessive bending of the optical fiber; etc.

When ME **120₁** in the first landing station **102₁** transmits a supervisory optical signal in carrier wavelength λ₁ (possibly along with payload optical signals in carrier wavelengths λ₃-λₙ from SLTE **110₁**), a portion of those incoming signals received at input port **INₐ** are tapped by coupler **C1** and forwarded to delay **D1,** which delays those tapped incoming signals and applies the delayed, tapped incoming signals to coupler **C4.** Meanwhile, the remaining portion of the incoming signals are amplified by OA **260ₐ** to apply amplified outgoing signals at output port **OUTₐ**. A portion of those outgoing signals is tapped by coupler **C2** and forwarded to coupler **C4** without being delayed.

Coupler **C4** combines the delayed, tapped incoming signals from delay **D1** and the un-delayed, tapped outgoing signals from coupler **C2** and applies the combined signals to filter **F1** which passes only the delayed, tapped, incoming supervisory signal in carrier wavelength λ₁ and the un-delayed, tapped, amplified, outgoing supervisory signal in carrier wavelength λ₁. The filtered, combined signals from filter **F1** are coupled by coupler **C3** into optical path **240_{b}** as loop-back, combined, supervisory signals that are transmitted (and amplified) along optical path **240_{b}** to DMUX **136₁** in the first landing station **102₁**, which forwards the looped-back, combined, supervisory signals to ME **120₁** for signal processing.

Delay **D1** is designed such that the magnitude of the time delay applied to the incoming signals relative to the timing of the un-delayed, amplified, outgoing signals is sufficient to enable ME **102₁** to use suitable signal-processing techniques to determine both the amplitude of the incoming supervisory signal applied to OA **260ₐ** and the amplitude of the amplified outgoing supervisory signal generated by OA **260ₐ**. In this way, ME **102₁** can determine the gain of OA **260ₐ**. Those skilled in the art will understand that the type of signal used for the supervisory signal and the corresponding type of signal processing performed by ME **102₁** are selected to achieve that result. For example, the supervisory signal may be a simple impulse or suitable binary sequences. The ME may use a suitable signal autocorrelation processing with or without averaging. The ME may use a direct detection receiver or a coherent detection receiver.

In an analogous manner and possibly simultaneously, ME **120₂** in the second landing station **102₂** may transmit a supervisory optical signal in carrier wavelength λ₂ (possibly along with payload optical signals in carrier wavelengths λ₃-λₙ from SLTE **110₂**), with optical repeater **250** performing analogous operations to generate analogous, combined looped-back signals in carrier wavelength λ₂ to be transmitted back to ME **120₂** for analogous signal processing relative to OA **260_{b}**.

In this way, optical repeater **250** supports supervisory monitoring of both OA **260ₐ** and OA **260_{b}**, where ME **120₁** uses only carrier wavelength λ₁ and ME **120₂** uses only carrier wavelength λ₂.

For OTDR monitoring, coupler **C2** taps a portion of the reflected optical signal received at output port **OUTₐ** and forwards that tapped signal to coupler C5 via optical pathway **P5** for transmission back to ME **120₁** without being filtered, while coupler C6 taps a portion of the reflected optical signal received at output port **OUT_{b}** and forwards that tapped signal to coupler **C1** via optical pathway **P6** for transmission back to ME **120₂** also without being filtered.

FIG. 3 shows a block diagram of an optical repeater **350** that can be used for each optical repeater **150ⱼ** of FIG. 1 according to another embodiment. Unless explicitly described below, optical repeater **350** is analogous to optical repeater **250** of FIG. 2 with analogous elements performing similar functions.

Optical repeater **350** uses optical couplers **C1-C6,** delays **D1** and **D2,** filters **F1** and **F2,** and suitable interconnecting optical fibers or waveguides to form optical pathways **P1-P5** that couple optical paths **340ₐ** and **340_{b}**. Optical pathway **P1** connects coupler **C1** to coupler **C3** via delay **D1,** coupler **C4,** and filter **F1,** while optical pathway **P2** connects coupler **C2** to coupler **C3** via coupler **C4** and filter **F1,** such that optical pathways **P1** and **P2** share coupler **C4** and filter **F1**. Similarly, optical pathway **P3** connects coupler C3 to coupler **C1** via delay **D2,** coupler **C6,** and filter **F2,** while optical pathway **P4** connects coupler **C5** to coupler **C1** via coupler **C6** and filter **F2,** such that optical pathways **P3** and **P4** share coupler **C6** and filter **F2.** As such, optical pathways **P1** and **P3** are delayed pathways, while optical pathways **P2** and **P4** are un-delayed pathways.

In addition, optical repeater **350** has a single shared OTDR optical pathway **P5** that connects couplers **C2** and **C5.** Note that:
- Coupler **C1** is part of optical pathways **P1, P3,** and **P4;**
- Coupler **C2** is part of optical pathways **P2** and **P5;**
- Coupler **C3** is part of optical pathways **P1, P2,** and **P3;** and
- Coupler **C5** is part of optical pathways **P4** and **P5.**

In operation, optical repeater **350** provides (i) two different loop-back paths for the supervisory optical signals of carrier wavelength λ₁ via optical pathways **P1** and **P2** and (ii) two different loop-back paths for the supervisory optical signals of carrier wavelength λ₂ via optical pathways **P3** and **P4.** Optical repeater **350** also provides OTDR optical pathway **P5** for backscattered light to cross from optical path **340ₐ** to optical path **340_{b}**, and vice versa, this optical pathway being configured to bypass the filters **F1** and **F2.**

Like optical repeater **250** of FIG. 2, optical repeater **350** supports supervisory monitoring of both OA **360ₐ** and OA **360_{b}**, where ME **120₁** uses only carrier wavelength λ₁ and ME **120₂** uses only carrier wavelength λ₂.

As described above, each and every repeater **150** in the communication network **100** of FIG. 1 can be implemented using either the optical repeater **250** of FIG. 2 or the optical repeater **350** of FIG. 3. Those skilled in the art will understand that other suitable embodiments of optical repeaters may be used in the communication network **100** of FIG. 1 and/or that different optical repeaters **150** may be implemented using different embodiments. For example, although embodiments of optical repeaters have been described in which the incoming optical signals are delayed and the amplified outgoing optical signals are not delayed, in other embodiments, the amplified outgoing optical signals may be delayed with the incoming optical signals not being delayed. What is important is that those two different looped-back signals be sufficiently separated in time to enable the ME to independently characterize the amplitudes of those two signals. In some embodiments, sufficient time separation will be achieved if the magnitude of the delay is greater than or equal to the duration of a pulse in the corresponding supervisory signal, such that the two looped-back signals are distinguishable at the ME.

In the optical repeaters **250** and **350** of FIGs. 2 and 3, the two looped-back signals for the first supervisory signal having supervisory wavelength λ₁ are provided to optical path **240_{b}**/**340_{b}** at the input to OA **260_{b}**/ **360_{b}**. Similarly, the two looped-back signals for the second supervisory signal having supervisory wavelength λ₂ are provided to optical path **240ₐ**/**340ₐ** at the input to OA **260ₐ**/ **360ₐ**. In this way, the looped-back signals are amplified before being transmitted on to the corresponding next repeater. Although this is preferable, in alternative embodiments, the loop-back signals could in theory be provided to the corresponding optical paths at the outputs to the OAs. Note that, in the optical repeater **250** of FIG. 2, the OTDR signals are provided to the optical paths **240ₐ** and **240_{b}** at the inputs of the OAs **260ₐ** and **260_{b}**, respectively, while, in the optical repeater **350** of FIG. 3, the OTDR signals are provided to the optical paths **340ₐ** and **340_{b}** at the outputs of the OAs **360ₐ** and **360_{b}**.

The delays **D1** and **D2** in FIGs. 2 and 3 may be implemented using any suitable mechanism for delaying optical signals. In one implementation, each delay element may be an extra length of optical fiber sufficiently long to impose the desired time delay between the incoming and amplified outgoing optical signals. For example, in some implementations, the desired time delay is about 2.5 microseconds, and the corresponding length of optical fiber in each delay element is about 1 km. Other techniques for delaying the optical signals are possible, such as, converting the optical signals to the electrical domain, delaying the electrical signals electronically, and then reconverting the delayed electrical signal back into the optical domain.

In the embodiments of FIGs. 2 and 3, each optical repeater is configured to operate with two different supervisory wavelengths λ₁ and λ₂, one for each optical amplifier, such that the optical repeaters can support simultaneous supervisory monitoring of both optical amplifiers. In alternative embodiments not covered by the appended claims, , an optical repeater is configured to operate with only one supervisory wavelength. For example, optical repeater **250** of FIG. 2 or optical repeater **350** of FIG. 3 could be modified to have two filters **F1** or two filters **F2** instead of one of each by adding adequate attenuators in optical pathways **P1, P2, P3,** and **P4** to avoid resonance loops. In such embodiments, the two optical amplifiers would be able to be characterized sequentially, but not simultaneously. In another alternative embodiment not covered by the appended claims, optical repeater **250** of FIG. 2 or optical repeater **350** of FIG. 3 could be modified to use no filters by adding adequate attenuators in optical pathways **P1, P2, P3,** and **P4** to avoid carrier crosstalk penalties. In this case, no dedicated wavelength for the line monitoring is assigned. The ME could use any wavelength from λ₁-λₙ (like OTDR measurement). The optical repeaters **250** and **350** of FIGs. 2 and 3 would be symmetrical in this case.

Although specific embodiments have been described in which optical repeaters have optical filters, in general, optical repeaters may be said to have optical elements that modify the applied optical signals, where those optical elements could be (without limitation) optical filters or optical attenuators.

Although embodiments have been described in the context of submarine applications in which the optical communication system has terrestrial landing stations and intermediate optical repeaters that are located under water, embodiments can also be implemented for terrestrial applications in which the "landing stations" and the optical repeaters are located on land as well as hybrid applications in which the landing stations and some of the optical repeaters are located on land with the rest of the optical repeaters located under water.

According to an example embodiment disclosed above, e.g., in the summary section and/or in reference to any one or any combination of some or all of FIGs. 1-3, provided is an apparatus according to claim 1.

In some embodiments of the above apparatus, the looped-back incoming version and the looped-back amplified outgoing version of the first supervisory signal are separated in time by 2.5 microseconds.

In some embodiments of any of the above apparatus, one of the first and second optical pathways comprises a first discrete delay element (**D1**) configured to separate the looped-back incoming version and the looped-back amplified outgoing version of the first supervisory signal in time.

In some embodiments of any of the above apparatus, each of the first and second optical pathways comprises a first filter (**F1**) configured to pass optical signals of the first wavelength.

In some embodiments of any of the above apparatus, the first and second optical pathways share a common first filter element (**F1**) configured to pass optical signals of the first wavelength.

In some embodiments of any of the above apparatus, the optical repeater further comprises a third optical pathway (**P3**) connected between the input of the second OA and the first optical path, and a fourth optical pathway (**P4**) connected between the output of the second OA and the first optical path. When the optical repeater receives a second supervisory signal having a second wavelength (λ₂) at the second input node, the third optical pathway provides a looped-back incoming version of the second supervisory signal to the first optical path, and the fourth optical pathway provides a looped-back amplified outgoing version of the second supervisory signal to the first optical path. The third and fourth optical pathways are configured such that the looped-back incoming version and the looped-back amplified outgoing version of the second supervisory signal are separated in time.

In some embodiments of any of the above apparatus, one of the first and second optical pathways comprises a first discrete delay element (**D1**) configured to separate the looped-back incoming version and the looped-back amplified outgoing version of the first supervisory signal in time, and one of the third and fourth optical pathways comprises a second discrete delay element (**D2**) configured to separate the looped-back incoming version and the looped-back amplified outgoing version of the second supervisory signal in time.

In some embodiments of any of the above apparatus, each of the first and second optical pathways comprises a first filter element (**F1**) configured to pass optical signals of the first wavelength, and each of the third and fourth optical pathways comprises a second filter element (**F2**) configured to pass optical signals of the second wavelength.

In some embodiments of any of the above apparatus, the first and second optical pathways share a common first filter element (**F1**) configured to pass optical signals of the first wavelength and block optical signals of the second wavelength, and the third and fourth optical pathways share a common second filter element (**F2**) configured to pass optical signals of the second wavelength and block optical signals of the first wavelength.

In some embodiments of any of the above apparatus, the optical repeater further comprises a fifth optical pathway (**P5**) configured to receive a first OTDR signal from the first optical path and provide the first OTDR signal to the second optical path.

In some embodiments of any of the above apparatus, the optical repeater further comprises a sixth optical pathway (**P6**) configured to receive a second OTDR signal from the second optical path and provide the second OTDR signal to the first optical path.

In some embodiments of any of the above apparatus, the fifth optical pathway (**P5** of FIG. 3) is further configured to receive a second OTDR signal from the second optical path and provide the second OTDR signal to the first optical path.

In some embodiments of any of the above apparatus, the apparatus (**100**) comprises first and second landing stations (**102₁** and **102₂**) connected by one or more instances of the optical repeater interconnected by optical fibers (**140**), wherein the first landing station is configured to (i) transmit the first supervisory signal in the first optical path and (ii) receive and process the looped-back incoming version and the looped-back amplified outgoing version of the first supervisory signal to independently characterize amplitude of the incoming supervisory signal and amplitude of the amplified outgoing supervisory signal.

According to another example embodiment disclosed above, e.g., in the summary section and/or in reference to any one or any combination of some or all of FIGs. 1-3 provided is a method of operating the optical repeater (**250**, **350**) described above, the method being according to claim 11.

In some embodiments of the above method, the method further comprises the optical repeater receiving the second supervisory signal having the second wavelength (λ₂) at the second input port simultaneously with the optical repeater receiving the first supervisory signal having the first wavelength at the first input port; the third optical pathway (**P3**) providing the looped-back incoming version of the second supervisory signal to the first optical path; and the fourth optical pathway (**P4**) providing the looped-back amplified outgoing version of the second supervisory signal to the first optical path, wherein the looped-back incoming version and the looped-back amplified outgoing version of the second supervisory signal are separated in time.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure. For example, a relatively thin layer of adhesive or other suitable binder can be used to implement such "direct attachment" of the two corresponding components in such physical structure.

As used herein in reference to an element and a standard, the term compatible means that the element communicates with other elements in a manner wholly or partially specified by the standard, and would be recognized by other elements as sufficiently capable of communicating with the other elements in the manner specified by the standard. The compatible element does not need to operate internally in a manner specified by the standard.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The description and drawings merely illustrate the principles of the disclosure. It will thus be appreciated that those of ordinary skill in the art will be able to devise various arrangements that, although not explicitly described or shown herein, embody the principles of the disclosure within the scope of the appended claims. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions.

## Claims

1. An apparatus comprising an optical repeater (**250**, **350**) having (i) a first input port (**INₐ**) and a first output port (**OUTₐ**) for a first optical path (**240ₐ**, **340ₐ**) and (ii) a second input port (**IN_{b}**) and a second output port (**OUT_{b}**) for a second optical path (**240_{b}**, **340_{b}**), the optical repeater comprising:
a first optical amplifier OA (**260ₐ**, **360ₐ**) configured to receive first incoming optical signals from the first input port and output corresponding first amplified, outgoing optical signals to the first output port;
a second OA (**260_{b}**, **360_{b}**) configured to receive second incoming optical signals from the second input port and output corresponding second amplified, outgoing optical signals to the second output port;
a first optical pathway (**P1**) connected between the input of the first OA and the second optical path; and
a second optical pathway (**P2**) connected between the output of the first OA and the second optical path,
a third optical pathway (**P3**) connected between the input of the second OA and the first optical path; and
a fourth optical pathway (**P4**) connected between the output of the second OA and the first optical path,
wherein, in response to receiving by the optical repeater a first supervisory signal having a first wavelength (λ₁) at the first input port:
the first optical pathway provides a looped-back incoming version of the first supervisory signal to the second optical path; and
the second optical pathway provides a looped-back amplified outgoing version of the first supervisory signal to the second optical path, wherein the first and second optical pathways are configured such that the looped-back incoming version and the looped-back amplified outgoing version of the first supervisory signal are separated in time, wherein separated in time means that one of the optical signals among the looped-back incoming version and the looped-back amplified outgoing amplified version of the first supervisory signal is delayed with respect to the other optical signal
and wherein, in response to receiving by the optical repeater a second supervisory signal having a second wavelength (λ₂) at the second input port:
the third optical pathway provides a looped-back incoming version of the second supervisory signal to the first optical path; and
the fourth optical pathway provides a looped-back amplified outgoing version of the second supervisory signal to the first optical path, wherein the third and fourth optical pathways are configured such that the looped-back incoming version and the looped-back amplified outgoing version of the second supervisory signal are separated in time, wherein separated in time means that one of the optical signals between the looped-back incoming version and the looped-back amplified outgoing amplified version of the second supervisory signal is delayed with respect to the other optical signal,
the optical repeater being **characterized in that**
the first and second optical pathways share a common first filter element (**F1**) configured to pass optical signals of the first wavelength and block optical signals of the second wavelength; and
the third and fourth optical pathways share a common second filter element (**F2**) configured to pass optical signals of the second wavelength and block optical signals of the first wavelength.

2. The apparatus of claim 1, wherein the looped-back incoming version and the looped-back amplified outgoing version of the first supervisory signal are separated in time by at least the duration of a pulse in the first supervisory signal.

3. The apparatus of any one of claims 1-2, wherein one of the first and second optical pathways comprises a first discrete delay element (**D1**) configured to separate the looped-back incoming version and the looped-back amplified outgoing version of the first supervisory signal in time.

4. The apparatus of any one of claims 1-3, wherein each of the first and second optical pathways comprises a first filter (**F1**) configured to pass optical signals of the first wavelength.

5. The apparatus of claim 4, wherein the first and second optical pathways share a common first filter element (**F1**) configured to pass optical signals of the first wavelength.

6. The apparatus of any one of claims 1 to 5, wherein:
one of the first and second optical pathways comprises a first discrete delay element (**D1**) configured to separate the looped-back incoming version and the looped-back amplified outgoing version of the first supervisory signal in time; and
one of the third and fourth optical pathways comprises a second discrete delay element (D2) configured to separate the looped-back incoming version and the looped-back amplified outgoing version of the second supervisory signal in time.

7. The apparatus of any one of claims 1 to 6, wherein the optical repeater further comprises:
a fifth optical pathway (**P5**) configured to receive a first OTDR signal from the first optical path and provide the first OTDR signal to the second optical path.

8. The apparatus of claim 7, wherein the optical repeater further comprises:
a sixth optical pathway (**P6**) configured to receive a second OTDR signal from the second optical path and provide the second OTDR signal to the first optical path.

9. The apparatus of claim 7, wherein the fifth optical pathway (**P5** of FIG. 3) is further configured to receive a second OTDR signal from the second optical path and provide the second OTDR signal to the first optical path.

10. The apparatus (**100**) of any one of claims 1-9, comprising first and second landing stations (**102₁** and **102₂**) connected by one or more instances of the optical repeater interconnected by optical fibers (**140**), wherein the first landing station is configured to (i) transmit the first supervisory signal in the first optical path and (ii) receive and process the looped-back incoming version and the looped-back amplified outgoing version of the first supervisory signal to independently characterize amplitude of the incoming supervisory signal and amplitude of the amplified outgoing supervisory signal.

11. A method of operating the optical repeater (**250**, **350**) of claim 1, the method comprising:
the first OA (**260ₐ**, **360ₐ**) receiving the first incoming optical signals from the first input port and outputting the corresponding first amplified, outgoing optical signals to the first output port;
the second OA (**260_{b}**, **360_{b}**) receiving the second incoming optical signals from the second input port and outputting the corresponding second amplified, outgoing optical signals to the second output port;
the optical repeater receiving the first supervisory signal having the first wavelength (λ₁) at the first input port;
the first optical pathway (**P1**) providing the looped-back incoming version of the first supervisory signal to the second optical path; and
the second optical pathway (**P2**) providing the looped-back amplified outgoing version of the first supervisory signal to the second optical path, wherein the looped-back incoming version and the looped-back amplified outgoing version of the first supervisory signal are separated in time;
the optical repeater receiving the second supervisory signal having the second wavelength (λ₂) at the second input port simultaneously with the optical repeater receiving the first supervisory signal having the first wavelength at the first input port;
the third optical pathway (**P3**) providing the looped-back incoming version of the second supervisory signal to the first optical path; and
the fourth optical pathway (**P4**) providing the looped-back amplified outgoing version of the second supervisory signal to the first optical path, wherein the looped-back incoming version and the looped-back amplified outgoing version of the second supervisory signal are separated in time.

## Patentansprüche

1. Vorrichtung, die einen optischen Repeater (**250**, **350**) umfasst, der (i) einen ersten Eingangsport (**INₐ**) und einen ersten Ausgangsport (**OUTₐ**) für einen ersten optischen Pfad (**240ₐ**, **340ₐ**) und (ii) einen zweiten Eingangsport (**IN_{b}**) und einen zweiten Ausgangsport (**OUT_{b}**) für einen zweiten optischen Pfad (**240_{b}**, **340_{b}**) aufweist, wobei der optische Repeater Folgendes umfasst:
einen ersten optischen Verstärker OA (**260ₐ**, **360ₐ**) , der dazu ausgelegt ist, erste ankommende optische Signale vom ersten Eingangsport zu empfangen und entsprechende erste verstärkte abgehende optische Signale an den ersten Ausgangsport auszugeben;
einen zweiten OA (**260_{b}**, **360_{b}**) , der dazu ausgelegt ist, zweite ankommende optische Signale vom zweiten Eingangsport zu empfangen und entsprechende zweite verstärkte abgehende optische Signale an den zweiten Ausgangsport auszugeben;
einen ersten optischen Pfad (**P1**), der zwischen dem Eingang des ersten OA und dem zweiten optischen Pfad verbunden ist; und
einen zweiten optischen Pfad (**P2**), der zwischen dem Ausgang des ersten OA und dem zweiten optischen Pfad verbunden ist,
einen dritten optischen Pfad (**P3**), der zwischen dem Eingang des zweiten OA und dem ersten optischen Pfad verbunden ist; und
einen vierten optischen Pfad (**P4**), der zwischen dem Ausgang des zweiten OA und dem ersten optischen Pfad verbunden ist,
wobei in Reaktion auf das Empfangen eines ersten Überwachungssignals mit einer ersten Wellenlänge (λ₁) durch den optischen Repeater am ersten Eingangsport:
der erste optische Weg eine rückgeschleifte ankommende Version des ersten Überwachungssignals zum zweiten optischen Pfad bereitstellt; und
der zweite optische Weg eine rückgeschleifte verstärkte abgehende Version des ersten Überwachungssignals zum zweiten optischen Pfad bereitstellt, wobei der erste und der zweite optische Weg derart ausgelegt sind, dass die rückgeschleifte ankommende Version und die rückgeschleifte verstärkte abgehende Version des ersten Überwachungssignals zeitlich getrennt sind, wobei zeitlich getrennt bedeutet, dass eines der optischen Signale unter der rückgeschleiften ankommenden Version und der rückgeschleiften verstärkten abgehenden verstärkten Version des ersten Überwachungssignals mit Bezug auf das andere optische Signal verzögert ist
und wobei in Reaktion auf das Empfangen eines zweiten Überwachungssignals mit einer zweiten Wellenlänge (λ₂) durch den optischen Repeater am zweiten Eingangsport:
der dritte optische Weg eine rückgeschleifte ankommende Version des zweiten Überwachungssignals zum ersten optischen Pfad bereitstellt; und
der vierte optische Weg eine rückgeschleifte verstärkte abgehende Version des zweiten Überwachungssignals zum ersten optischen Pfad bereitstellt, wobei der dritte und der vierte optische Weg derart ausgelegt sind, dass die rückgeschleifte ankommende Version und die rückgeschleifte verstärkte abgehende Version des zweiten Überwachungssignals zeitlich getrennt sind, wobei zeitlich getrennt bedeutet, dass eines der optischen Signale zwischen der rückgeschleiften ankommenden Version und der rückgeschleiften verstärkten abgehenden verstärkten Version des zweiten Überwachungssignals mit Bezug auf das andere optische Signal verzögert ist,
wobei der optische Repeater **dadurch gekennzeichnet ist, dass**
der erste und der zweite optische Weg ein gemeinsames erstes Filterelement (**F1**), das dazu ausgelegt ist, optische Signale der ersten Wellenlänge durchzuleiten und optische Signale der zweiten Wellenlänge zu blockieren, gemeinsam verwenden; und
der dritte und der vierte optische Weg ein gemeinsames zweites Filterelement (**F2**), das dazu ausgelegt ist, optische Signale der zweiten Wellenlänge durchzuleiten und optische Signale der ersten Wellenlänge zu blockieren, gemeinsam verwenden.

2. Vorrichtung nach Anspruch 1, wobei die rückgeschleifte ankommende Version und die rückgeschleifte verstärkte abgehende Version des ersten Überwachungssignals zeitlich mindestens um die Dauer eines Impulses des ersten Überwachungssignals getrennt sind.

3. Vorrichtung nach einem der Ansprüche 1-2, wobei einer des ersten und des zweiten optischen Weges ein erstes diskretes Verzögerungselement (**D1**) umfasst, das dazu ausgelegt ist, die rückgeschleifte ankommende Version und die rückgeschleifte verstärkte abgehende Version des ersten Überwachungssignals zeitlich zu trennen.

4. Vorrichtung nach einem der Ansprüche 1-3, wobei jeder des ersten und des zweiten optischen Weges ein erstes Filter[element] (**F1**) umfasst, das dazu ausgelegt ist, optische Signale der ersten Wellenlänge durchzuleiten.

5. Vorrichtung nach Anspruch 4, wobei der erste und der zweite optische Weg ein gemeinsames erstes Filterelement (F1), das dazu ausgelegt ist, optische Signale der ersten Wellenlänge durchzuleiten, gemeinsam verwenden.

6. Vorrichtung nach einem der Ansprüche 1 bis 5, wobei:
einer des ersten und des zweiten optischen Weges ein erstes diskretes Verzögerungselement (**D1**) umfasst, das dazu ausgelegt ist, die rückgeschleifte ankommende Version und die rückgeschleifte verstärkte abgehende Version des ersten Überwachungssignals zeitlich zu trennen; und
einer des dritten und des vierten optischen Weges ein zweites diskretes Verzögerungselement (**D2**) umfasst, das dazu ausgelegt ist, die rückgeschleifte ankommende Version und die rückgeschleifte verstärkte abgehende Version des zweiten Überwachungssignals zeitlich zu trennen.

7. Vorrichtung nach einem der Ansprüche 1 bis 6, wobei der optische Repeater ferner Folgendes umfasst:
einen fünften optischen Pfad (**P5**), der dazu ausgelegt ist, ein erstes OTDR-Signal vom ersten optischen Pfad zu empfangen und das erste OTDR-Signal dem zweiten optischen Pfad bereitzustellen.

8. Vorrichtung nach Anspruch 7, wobei der optische Repeater ferner Folgendes umfasst:
einen sechsten optischen Pfad (**P6**), der dazu ausgelegt ist, ein zweites OTDR-Signal vom zweiten optischen Pfad zu empfangen und das zweite OTDR-Signal dem ersten optischen Pfad bereitzustellen.

9. Vorrichtung nach Anspruch 7, wobei der fünfte optische Weg (**P5** in FIG. 3) ferner dazu ausgelegt ist, ein zweites OTDR-Signal vom zweiten optischen Pfad zu empfangen und das zweite OTDR-Signal dem ersten optischen Pfad bereitzustellen.

10. Vorrichtung (**100**) nach einem der Ansprüche 1-9, die eine erste und eine zweite Anlandestation (**102₁** und **102₂**) umfasst, die durch eine oder mehrere Instanzen des optischen Repeaters verbunden sind, die über optische Fasern (**140**) gekoppelt sind, wobei die erste Anlandestation dazu ausgelegt ist, (i) das erste Überwachungssignal auf dem ersten optischen Pfad zu übertragen und (ii) die rückgeschleifte ankommende Version und die rückgeschleifte verstärkte abgehende Version des ersten Überwachungssignals zu empfangen und zu verarbeiten, um eine Amplitude des ankommenden Überwachungssignals und eine Amplitude des verstärkten abgehenden Überwachungssignals unabhängig zu charakterisieren.

11. Verfahren zum Betreiben des optischen Repeaters (250, **350**) nach Anspruch 1, wobei das Verfahren Folgendes umfasst:
Empfangen der ersten ankommenden optischen Signale vom ersten Eingangsport und Ausgeben der entsprechenden ersten verstärkten abgehenden optischen Signale an den ersten Ausgangsport durch den ersten OA (**260ₐ**, **360ₐ**);
Empfangen der zweiten ankommenden optischen Signale vom zweiten Eingangsport und Ausgeben der entsprechenden zweiten verstärkten abgehenden optischen Signale an den zweiten Ausgangsport durch den zweiten OA (**260_{b}**, **360_{b}**);
Empfangen des ersten Überwachungssignals, das die erste Wellenlänge (λ₁) aufweist, durch den optischen Repeater am ersten Eingangsport;
Bereitstellen der rückgeschleiften ankommenden Version des ersten Überwachungssignals durch den ersten optischen Weg (**P1**) zum zweiten optischen Pfad; und
Bereitstellen der rückgeschleiften verstärkten abgehende Version des ersten Überwachungssignals durch den zweiten optischen Weg (**P2**) zum zweiten optischen Pfad, wobei die rückgeschleifte ankommende Version und die rückgeschleifte verstärkte abgehende Version des ersten Überwachungssignals zeitlich getrennt sind;
Empfangen des zweiten Überwachungssignals, das eine zweite Wellenlänge (λ₂) aufweist, durch den optischen Repeater am zweiten Eingangsport gleichzeitig mit dem Empfangen des ersten Überwachungssignals, das die erste Wellenlänge aufweist, durch den optischen Repeater am ersten Eingangsport;
Bereitstellen der rückgeschleiften ankommenden Version des zweiten Überwachungssignals durch den zweiten optischen Weg (**P3**) zum ersten optischen Pfad; und
Bereitstellen der rückgeschleiften verstärkten abgehende Version des zweiten Überwachungssignals durch den vierten optischen Weg (**P4**) zum ersten optischen Pfad, wobei die rückgeschleifte ankommende Version und die rückgeschleifte verstärkte abgehende Version des zweiten Überwachungssignals zeitlich getrennt sind.

## Revendications

1. Appareil comprenant un répéteur optique (250, 350) ayant (i) un premier port d'entrée (iNₐ) et un premier port de sortie (OUTₐ) pour un premier chemin optique (240ₐ, 340ₐ) et (ii) un deuxième port d'entrée (iN_{b}) et un deuxième port de sortie (OUT_{b}) pour un deuxième chemin optique (240_{b}, 340_{b}), le répéteur optique comprenant :
un premier amplificateur optique OA (260ₐ, 360ₐ) configuré pour recevoir des premiers signaux optiques entrants du premier port d'entrée et délivrer des premiers signaux optiques sortants amplifiés correspondants au premier port de sortie ;
un deuxième OA (260_{b}, 360_{b}) configuré pour recevoir des deuxièmes signaux optiques entrants du deuxième port d'entrée et délivrer des deuxièmes signaux optiques sortants amplifiés correspondants au deuxième port de sortie ;
une première voie optique (P1) connectée entre l'entrée du premier OA et le deuxième chemin optique ; et
une deuxième voie optique (P2) connectée entre la sortie du premier OA et le deuxième chemin optique,
une troisième voie optique (P3) connectée entre l'entrée du deuxième OA et le premier chemin optique ; et
une quatrième voie optique (P4) connectée entre la sortie du deuxième OA et le premier chemin optique,
dans lequel, en réponse à la réception par le répéteur optique d'un premier signal de supervision ayant une première longueur d'onde (λ1) au niveau du premier port d'entrée :
la première voie optique fournit une version entrante renvoyée en boucle du premier signal de supervision au deuxième chemin optique ; et
la deuxième voie optique fournit une version sortante amplifiée renvoyée en boucle du premier signal de supervision au deuxième chemin optique, dans lequel les première et deuxième voies optiques sont configurées de sorte que la version entrante renvoyée en boucle et la version sortante amplifiée renvoyée en boucle du premier signal de supervision soient séparées dans le temps, la séparation dans le temps signifiant que l'un des signaux optiques parmi la version entrante renvoyée en boucle et la version amplifiée sortante amplifiée renvoyée en boucle du premier signal de supervision est retardé par rapport à l'autre signal optique,
et dans lequel, en réponse à la réception par le répéteur optique d'un deuxième signal de supervision ayant une deuxième longueur d'onde (λ₂) au niveau du deuxième port d'entrée :
la troisième voie optique fournit une version entrante renvoyée en boucle du deuxième signal de supervision au premier chemin optique ; et
la quatrième voie optique fournit une version sortante amplifiée renvoyée en boucle du deuxième signal de supervision au premier chemin optique, dans lequel les troisième et quatrième voies optiques sont configurées de sorte que la version entrante renvoyée en boucle et la version sortante amplifiée renvoyée en boucle du deuxième signal de supervision soient séparées dans le temps, la séparation dans le temps signifiant que l'un des signaux optiques entre la version entrante renvoyée en boucle et la version amplifiée sortante amplifiée renvoyée en boucle du deuxième signal de supervision est retardé par rapport à l'autre signal optique,
le répéteur optique étant **caractérisé en ce que**
les première et deuxième voies optiques partagent un premier élément de filtre commun (F1) configuré pour laisser passer les signaux optiques de la première longueur d'onde et bloquer les signaux optiques de la deuxième longueur d'onde ; et
les troisième et quatrième voies optiques partagent un deuxième élément de filtre commun (F2) configuré pour laisser passer les signaux optiques de la deuxième longueur d'onde et bloquer les signaux optiques de la première longueur d'onde.

2. Appareil selon la revendication 1, dans lequel la version entrante renvoyée en boucle et la version sortante amplifiée renvoyée en boucle du premier signal de supervision sont séparées dans le temps par au moins la durée d'une impulsion dans le premier signal de supervision.

3. Appareil selon l'une des revendications 1 et 2, dans lequel l'une des première et deuxième voies optiques comprend un premier élément de retard discret (D1) configuré pour séparer dans le temps la version entrante renvoyée en boucle et la version sortante amplifiée renvoyée en boucle du premier signal de supervision.

4. Appareil selon l'une des revendications 1 à 3, dans lequel chacune des première et deuxième voies optiques comprend un premier élément de filtre commun (F1) configuré pour laisser passer les signaux optiques de la première longueur d'onde.

5. Appareil selon la revendication 4, dans lequel les première et deuxième voies optiques partagent un premier élément de filtre commun (F1) configuré pour laisser passer les signaux optiques de la première longueur d'onde.

6. Appareil selon l'une des revendications 1 à 5, dans lequel :
l'une des première et deuxième voies optiques comprend un premier élément de retard discret (D1) configuré pour séparer dans le temps la version entrante renvoyée en boucle et la version sortante amplifiée renvoyée en boucle du premier signal de supervision ; et
l'une des troisième et quatrième voies optiques comprend un deuxième élément de retard discret (D2) configuré pour séparer dans le temps la version entrante renvoyée en boucle et la version sortante amplifiée renvoyée en boucle du deuxième signal de supervision.

7. Appareil selon l'une des revendications 1 à 6, dans lequel le répéteur optique comprend en outre :
une cinquième voie optique (P5) configurée pour recevoir un premier signal OTDR du premier chemin optique et fournir le premier signal OTDR au deuxième chemin optique.

8. Appareil selon la revendication 7, dans lequel le répéteur optique comprend en outre :
une sixième voie optique (P6) configurée pour recevoir un deuxième signal OTDR du deuxième chemin optique et fournir le deuxième signal OTDR au premier chemin optique.

9. Appareil selon la revendication 7, dans lequel la cinquième voie optique (P5 de la FIG. 3) est en outre configurée pour recevoir un deuxième signal OTDR du deuxième chemin optique et fournir le deuxième signal OTDR au premier chemin optique.

10. Appareil (100) selon l'une des revendications 1 à 9, comprenant des première et deuxième stations d'atterrissage (**102₁** et **102₂**) connectées par une ou plusieurs instances du répéteur optique interconnectées par des fibres optiques (140), dans lequel la première station d'atterrissage est configurée pour (i) transmettre le premier signal de supervision dans le premier chemin optique et (ii) recevoir et traiter la version entrante renvoyée en boucle et la version sortante amplifiée renvoyée en boucle du premier signal de supervision pour caractériser indépendamment l'amplitude du signal de supervision entrant et l'amplitude du signal de supervision sortant amplifié.

11. Procédé de fonctionnement du répéteur optique (250, 350) selon la revendication 1, le procédé comprenant les étapes suivantes :
le premier OA (260a, 360a) reçoit les premiers signaux optiques entrants du premier port d'entrée et délivre les premiers signaux optiques sortants amplifiés correspondants au premier port de sortie ;
le deuxième OA (260b, 360b) reçoit les deuxièmes signaux optiques entrants du deuxième port d'entrée et délivre les deuxièmes signaux optiques sortants amplifiés correspondants au deuxième port de sortie ;
le répéteur optique reçoit le premier signal de supervision ayant la première longueur d'onde (λ₁) au niveau du premier port d'entrée ;
la première voie optique (P1) fournit la version entrante renvoyée en boucle du premier signal de supervision au deuxième chemin optique ; et
la deuxième voie optique (P2) fournit la version sortante amplifiée renvoyée en boucle du premier signal de supervision au deuxième chemin optique, dans lequel la version entrante renvoyée en boucle et la version sortante amplifiée renvoyée en boucle du premier signal de supervision sont séparées dans le temps ;
le répéteur optique reçoit le deuxième signal de supervision ayant la deuxième longueur d'onde (λ₂) au niveau du deuxième port d'entrée en même temps que le répéteur optique reçoit le premier signal de supervision ayant la première longueur d'onde au niveau du premier port d'entrée ;
la troisième voie optique (P3) fournit la version entrante renvoyée en boucle du deuxième signal de supervision au premier chemin optique ; et
la quatrième voie optique (P4) fournit la version sortante amplifiée renvoyée en boucle du deuxième signal de supervision au premier chemin optique, dans lequel la version entrante renvoyée en boucle et la version sortante amplifiée renvoyée en boucle du deuxième signal de supervision sont séparées dans le temps.
